# EUROPÄISCHE PATENTSCHRIFT

(11) **EP 2 520 519 B1**
(45) Veröffentlichungstag und Bekanntmachung des Hinweises auf die Patenterteilung: **09.10.2013**
(21) Anmeldenummer: 12165928.8
(22) Anmeldetag: 27.04.2012
(51) Int. Cl.: B65G 17/18, B65G 17/48

(54) **Fördervorrichtung**
Conveying device
Dispositif de convoyage

(30) Priorität: 02.05.2011 DE 102011100205
(43) Veröffentlichungstag der Anmeldung: 07.11.2012
(73) Patentinhaber: Robert Bürkle GmbH, 72250 Freudenstadt (DE)
(72) Erfinder: Koch, Thorsten, 32120 Hiddenhausen (DE); Sprint, Hubert, 32108 Bad Salzuflen (DE)
(74) Vertreter: Lemcke, Brommer & Partner

(56) Entgegenhaltungen:
- GB-A- 1 320 596
- US-A- 2 266 170
- US-A- 2 816 000

## Beschreibung

Die Erfindung betrifft eine Fördervorrichtung nach dem Oberbegriff des Anspruchs 1, wie aus US 2, 266, 170 bekannt. Eine solche Fördervorrichtung umfasst demnach mindestens zwei Umlenkrollen, um die ein Zugelement, wie beispielsweise ein Förderband, eine Kette, ein Seil oder dergleichen endlos umläuft. An diesem Zugelement ist ein Schiebenocken befestigt, der letztendlich für die Transportbewegung des Fördergutes verantwortlich und damit das eigentliche Lastaufnahmemittel ist. Mindestens eine der Umlenkrollen ist angetrieben, um die Transportbewegung des Schiebenockens mittels des Zugelements zu bewirken.

Solche Fördervorrichtungen werden zum Fördern von stückigem Fördergut eingesetzt und können wegen des Schiebenockens insbesondere als Fördervorrichtung an Steigungen oder als Vertikalfördereinrichtung eingesetzt werden. In letzterem Falle ist es sinnvoll, zwei gegenüberliegende Fördervorrichtungen der vorliegenden Art vorzusehen, um die Werkstücke von zwei Seiten untergreifen und anheben zu können.

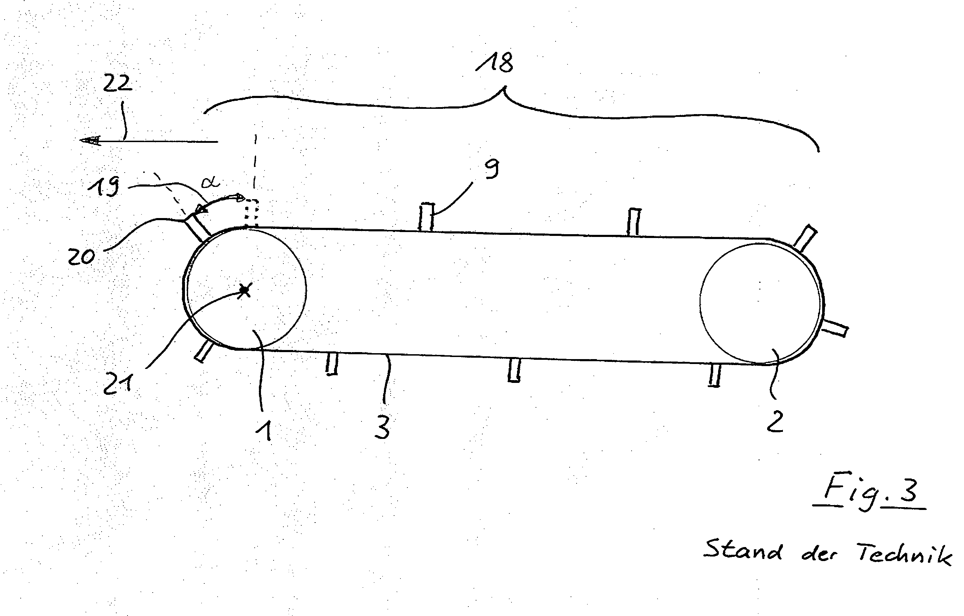

Ungünstig bei dieser Art von Fördervorrichtungen ist allerdings das Verhalten der Schiebenocken an denjenigen Umlenkrollen, die die Förderstrecke begrenzen, und zwar insbesondere am Ende der Förderstrecke. Denn da der Schiebenocken am Zugelement befestigt ist und dieses Zugelement sich entlang des Umfangs der Umlenkrolle bewegt, erhöht sich die absolute Geschwindigkeit des Schiebenockens relativ zur Geschwindigkeit des Zugelements, denn die Winkelgeschwindigkeit des Zugelements und des Schiebenockens ist zwangsläufig dieselbe. Je weiter der Schiebenocken über das Zugelement übersteht, um so größer wird dieser Effekt, denn die Bewegungsgeschwindigkeit der beteiligten Elemente ist wegen der konstanten Winkelgeschwindigkeit um so höher, je weiter diese Elemente von der Drehachse der Umlenkrolle entfernt sind. Figur 3, auf die am Ende der Figurenbeschreibung näher eingegangen wird, verdeutlicht diese Zusammenhänge nochmals.

Problematisch ist hierbei nun, dass der Schiebenocken am Ende der Transportstrecke beschleunigt wird, wenn er die Transportstrecke noch nicht verlassen hat, also noch in Wirkkontakt mit dem Fördergut steht. Denn bereits bei Beginn der Umlenkung um die die Transportstrecke beendende Umlenkrolle erhöht sich die Bewegungsgeschwindigkeit des Umlenknockens beim "Wegkippen" aus der Transportstrecke. Das aus Werkstücken bestehende Fördergut erhält im besten Fall an dieser Stelle also eine kurze Beschleunigung durch den Schiebenocken, im schlechtesten Fall wird das Fördergut durch die plötzlich erhöhte Geschwindigkeit und die verkleinerte Auflagefläche beschädigt (denn der Schiebenocken kippt ab und kontaktiert das Fördergut dann nur noch mit seiner äußeren Kante).

Die Gefahr von Beschädigungen besteht im übrigen auch am Beginn der Förderstrecke, wenn der Schiebenocken mit entsprechend erhöhter Geschwindigkeit beim Umlauf um die eingangsseitige Umlenkrolle in die Förderstrecke hineingeschwenkt wird. Insbesondere wenn die zu fördernden Werkstücke mit geringem Abstand zueinander auf die Förderstrecke gelangen oder von der Fördervorrichtung vereinzelt werden sollen, ist diese Problemstellung relevant.

Bei einer Fördervorrichtung der vorliegenden Art, wie sie beispielsweise in der US-A-2,266,170, der US-A-2,816,000 oder der GB-A-1,320,596 beschrieben ist, ist der Schiebenocken daher schwenkbar am Zugelement befestigt, so dass er nicht zwangsläufig wegkippt, wenn das Zugelement um eine Umlenkrolle läuft, und somit nicht die eingangs genannte beschleunigte Bewegung innerhalb der Transportstrecke ausführt. Um die Last des Fördergutes trotz der schwenkbaren Befestigung aufnehmen und eine Kraft auf das Fördergut übertragen zu können, ist der Schiebenocken außerdem über eine Gelenkanordnung mit einer Linearführung verbunden. Indem sich der Schiebenocken mittels der Gelenkanordnung entlang der Linearführung bewegt, kann er zwangsweise in einer Orientierung bzw. Winkelstellung senkrecht zur Linearführung gehalten werden, so dass er auch beim Umlaufen um eine Umlenkrolle nicht aus seiner innerhalb der Förderstrecke eingenommenen Orientierung herauskippen kann und insofern das Fördergut auch zu Beginn und am Ende der Förderstrecke mit konstanter Ausrichtung flächig unterstützt. Eine Beschädigung des Förderguts durch Abkippen des Schiebenockens und ein Verlagern des Kontakts zwischen dem Schiebenocken und dem Werkstück auf eine Kante des Nockens wird somit ausgeschlossen. Ferner führt der Schiebenocken aufgrund der Linearführung im wesentlichen keine Winkelbewegung aus, so dass die eingangs beschriebene unvorteilhafte Überlagerung einer Winkelgeschwindigkeit bzw. Schwenkbewegung des Schiebenockens mit der linearen Bewegung des Fördergutes nicht vorhanden ist. Das Fördergut wird am Ende der Förderstrecke also nicht durch eine wegkippende Schwenkbewegung des Schiebenockens beschleunigt.

Der vorliegenden Erfindung liegt die Aufgabe zugrunde, eine Fördervorrichtung der eingangs genannten Art zu verbessern bzw. konstruktiv zu vereinfachen.

Gelöst ist diese Aufgabe durch eine Fördervorrichtung mit den Merkmalen des Anspruchs 1. Bevorzugte Ausgestaltungen und Weiterbildungen der erfindungsgemäßen Fördervorrichtung sind in den Ansprüchen 2 bis 9 niedergelegt.

Die Gelenkanordnung, die den Schiebenocken mit seiner Linearführung verbindet, ist also eine Parallelogrammführung, die die Orientierung des Schiebenockens beim Umlauf desselben um die Umlenkrollen konstant hält. Diese Gelenkanordnung ist erfindungsgemäß durch den Schiebenocken, ein auf der Linearführung verdrehsicher geführtes Basisteil sowie zwei den Schiebenocken und das Basisteil verbindende und mit diesem ein Parallelogramm bildende Blattfedern gebildet. Dies bietet besondere Vorteile, denn durch die Verformbarkeit der Blattfedern können Gelenke im eigentlichen Sinne, die also mit Schwenklagern versehen sind, entfallen. Die Blattfedern sind elastisch genug, um einen Umlauf des Schiebenockens zusammen mit dem Zugelement um die Umlenkrollen mitzumachen, auf der anderen Seite jedoch auch stabil genug, um den Schiebenocken hierbei in seiner Winkelstellung relativ zur Linearführung konstant zu halten und die Linearführung mitzubewegen. Es handelt sich mithin um eine Parallelogrammführung, bei der die Lenker und deren Schwenklager durch Blattfedern gebildet sind.

Das Zugelement kann im Rahmen der vorliegenden Erfindung eine endlos umlaufende Kette, ein Seil und dergleichen, oder auch ein Band oder Fördergurt sowie ein Riemen, insbesondere ein Zahnriemen sein. Die erfindungsgemäße Vorrichtung kann als Horizontalförderer ausgebildet sein, wird jedoch bevorzugt als Vertikalförderer zum Anheben von Werkstücken mittels der Schiebenocken oder als Fördervorrichtung für Steigungen verwendet.

In einer bevorzugten Ausgestaltung der erfindungsgemäßen Fördervorrichtung sind zwei Schiebenocken am Zugelement befestigt, und zwar derart, dass sie um einen halben Umlauf des Zugelements versetzt sind. Bezüglich der Umlaufbewegung des Zugelements liegen sich die Schiebenocken also dann exakt gegenüber, so dass immer dann, wenn ein Schiebenocken am Ende der Förderstrecke angelangt und aus dieser herausgenommen wird, der andere Schiebenocken am Beginn der Förderstrecke steht. Bei der Bewegung des Zugelements wird also immer ein in der Förderstrecke aktiver Schiebenocken mitgeführt, so dass sich ein Tandemnockensystem ergibt, bei dem keinerlei Leerhub erfolgt. Auf diese Art und Weise bietet die erfindungsgemäße Fördervorrichtung auch bei einer gegebenenfalls erwünschten langsamen Transportgeschwindigkeit eine hohe Förderleistung.

Die Umlenkrollen, das Zugelement, der Schiebenocken, die Gelenkanordnung und die Linearführung sind vorzugsweise auf einer gemeinsamen Halteplatte oder einem gemeinsamen Gehäuse angebracht, wobei bevorzugt eine der Umlenkrollen außerdem mit einer Spannvorrichtung versehen ist, um die Spannung des Zugelements justieren bzw. bei einer Längung desselben nachjustieren zu können.

Ein Ausführungsbeispiel für eine erfindungsgemäß ausgestaltete Fördervorrichtung wird im Folgenden anhand der beigefügten Zeichnungen näher beschrieben und erläutert. Es zeigen:
- Figur 1: eine schematische Draufsicht auf eine Fördervorrichtung;
- Figur 2: eine perspektivische Detailansicht einer Maschine, in der die Vorrichtung aus Figur 1 beispielhaft verwendet wird;
- Figur 3: eine Anordnung nach dem Stand der Technik.

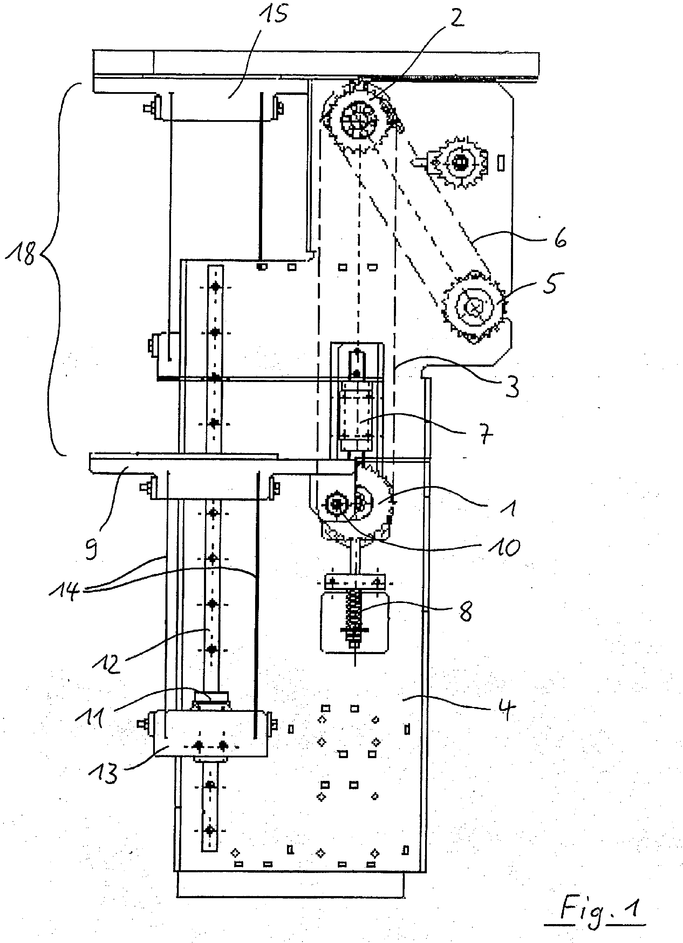

Figur 1 zeigt in einer schematischen Draufsicht eine erfindungsgemäß ausgestaltete, als Vertikalförderer ausgebildete Fördervorrichtung mit einer ersten Umlenkrolle 1 und einer zweiten, angetriebenen Umlenkrolle 2 sowie mit einem um diese beiden Umlenkrollen 1, 2 endlos umlaufenden Zugelement 3, das vorliegend von einer Rollenkette gebildet ist. Die beiden Umlenkrollen 1, 2 sind in einer Halteplatte 4 gelagert. An dieser ist ferner ein Antriebsmotor mit Kettenrad 5 und einer Antriebskette 6 zum Antrieb der zweiten Umlenkrolle 2 befestigt. Die erste Umlenkrolle 1 ist mit einer Spannvorrichtung 7 und einer Überlastsicherung 8 versehen.

Ein erster Schiebenocken 9 ist mittels eines Schwenklagers 10 schwenkbar am Zugelement 3 befestigt und wird demgemäß vom Zugelement 3 in dessen Umlauf um die Umlenkrollen 1, 2 zwangsweise mitgenommen. Damit der Schiebenocken 9 in der dargestellten, horizontalen Winkelstellung verbleibt, während er vom Zugelement 3 angehoben wird - denn nur so kann er als Lastaufnahmemittel für das Fördergut dienen - ist auf der Halteplatte 4 erfindungsgemäß eine Linearführung 11 auf einer Schiene 12 linear verfahrbar befestigt. Die Schiene 12 weist hierbei eine Länge auf, die mindestens dem Abstand zwischen den beiden Umlenkrollen 1, 2 plus jeweils deren Durchmesser entspricht. Auf der Linearführung 11 sitzt ein verdrehsicher befestigtes Basisteil 13, mit dem der Schiebenocken 9 über zwei parallel verlaufende Blattfedern 14 verbunden ist. Die Blattfedern 14 der Schiebenocken 9 und das Basisteil 13 bilden somit eine Parallelogrammführung des Schiebenockens 9, so dass dieser beim Umlauf um die Umlenkrollen 1, 2 immer seine horizontale Orientierung beibehält.

Auf der Rückseite der hier dargestellten Halteplatte 4 sind ein zweites, nicht sichtbares Zugelement und eine zweite, nicht sichtbare Linearführung in spiegelbildlicher Anordnung angebracht, welche einen zweiten Schiebenocken 15 phasenversetzt zum ersten Schiebenocken 9 bewegen. Hierdurch ergibt sich ein Tandemnockensystem, bei dem jeweils einer der beiden Schiebenocken 9, 15 einen Arbeitshub durchführt, während der andere mit dem Zugelement 3 wieder nach unten geführt wird. In diesem System gibt es daher keinen Leerhub; sobald der eine Schiebenocken 15 am oberen Endpunkt seiner Hubbewegung angelangt ist, tritt der andere Schiebenocken 9 in Aktion und kann während der Rückbewegung des einen Schiebenockens 15 ein weiteres Werkstück anheben.

Wie anhand Figur 1 einleuchtet, ist es sehr vorteilhaft, dass der zweite Schiebenocken 15 bei seinem Umlauf um die obere Umlenkrolle 2 seine Winkelstellung beibehält und nicht um die Umlenkrolle 2 schwenkend abkippt. Statt dessen wird der Schiebenocken 15 aufgrund der Kreisbewegung seines Schwenklagers um die obere Umlenkrolle 2 bis zum oberen Totpunkt mit einem sinusförmigen Geschwindigkeitsverlauf abgebremst, so dass im oberen Totpunkt des Umlaufs des Zugelements 3 bzw. des Schiebenockens 15 eine sanfte Übergabe des Werkstücks von der hier als Vertikalförderer ausgebildeten Fördervorrichtung an eine weiterverarbeitende oder weitertransportierende Einrichtung erfolgt. Hierbei wird der Schiebenocken 15 seitlich parallel zum Werkstück 16 weggezogen.

Die Bewegungssteuerung der in Figur 1 dargestellten Fördervorrichtung erfolgt erfindungsgemäß zwangsgeführt und rein mechanisch, so dass aufwendige elektronische Steuerungen, Stellmotoren und Sensoranordnungen überflüssig sind. Gleichwohl werden die Steuernocken 9, 15 entlang einer vertikalen Förderstrecke 18 linear nach oben bewegt, am Ende der Förderstrecke mit sinusförmigem Geschwindigkeitsverlauf abgebremst, zur Seite, parallel orientiert weggezogen und im zurückgezogenen Zustand wieder nach unten geführt, wo sie um die erste Umlenkrolle 1 umlaufend wieder in die Förderstrecke 18 eingebracht werden. In der Regel wird der Steuernocken 15, der zur Seite weggezogen wird, nach dieser parallel orientierten Bewegung abgestoppt, da der andere Steuernocken 9 in diesem Moment um die erste Umlenkrolle 1 umgelaufen ist und in der Förderstrecke 18 in Ausgangsposition, bereit zur Aufnahme eines weiteren Werkstücks steht.

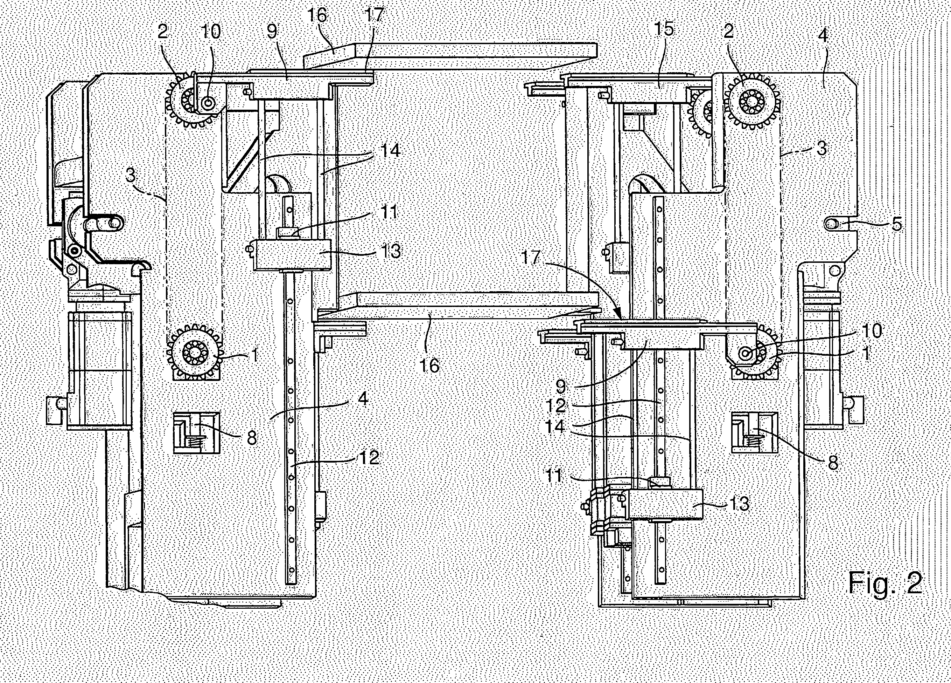

Figur 2 zeigt eine Anwendung der Fördervorrichtung aus Figur 1, wobei gleiche Elemente mit identischen Bezugszeichen versehen sind, so dass insoweit auf die Beschreibung der Figur 1 verwiesen werden kann. In der Vertikalfördereinrichtung, die in Figur 2 dargestellt ist, kommen insgesamt vier Fördervorrichtungen der in Figur 1 dargestellten Art zum Einsatz, so dass jeweils vier Steuernocken 9 zum Anheben eines Werkstücks 16 vorhanden sind, die phasenverschoben zu vier weiteren Steuernocken 15 arbeiten. Am oberen Ende der Fördervorrichtungen wird das Werkstück 16 von Halteelementen eines (nicht dargestellten) Stapelhalters bzw. Magazins erfasst, so dass die Schiebenocken 15 bei ihrem Umlauf um die oberen Umlenkrollen 2 seitlich weggezogen und wieder nach unten rückgeführt werden können.

Figur 3 zeigt schematisch eine Fördervorrichtung nach dem Stand der Technik, mit einer ersten Umlenkrolle 1, einer zweiten Umlenkrolle 2, einem als Fördergut ausgebildeten Zugelement 3 sowie einer Anzahl von Schiebenocken 9, die fest mit dem Zugelement 3 verbunden sind. Am Ende der Förderstrecke 18 werden die Schiebenocken 9 vom Zugelement 3 um die Umlenkrolle 1 herumgeführt, wodurch die Schiebenocken 9 eine Schwenkbewegung auf einer mit dem Pfeil 19 angedeuteten Kreislinie durchführen. Da die äußere Kante 20 der Schiebenocken 9 radial weiter von der Drehachse 21 der Umlenkrolle 1 entfernt sind, als das Zugelement 3, und da ferner die Winkelgeschwindigkeit in dieser Bewegungsphase für alle Bauteile gleich ist, bewegt sich der Schiebenocken 9 bezüglich der Förderrichtung 22 im Bereich der Umlenkrolle 1 schneller als in der übrigen Förderstrecke 18. Ein am Schiebenocken 9 anliegendes Werkstück wird demnach am Ende der Förderstrecke 18 unvorteilhaft beschleunigt und erhält diese Beschleunigungskraft außerdem nur noch von der Kante 20 des Schiebenockens 9, so dass die Gefahr einer Beschädigung des Fördergutes besteht, soweit dieses - wie beispielsweise Dämmstoffplatten aus Hartschaum - nicht allzu robust ist oder beispielsweise empfindliche, insbesondere bedruckte Oberflächen aufweist.

## Patentansprüche

1. Fördervorrichtung mit einem um mindestens zwei Umlenkrollen (1, 2) endlos umlaufenden Zugelement (3) und mindestens einem am Zugelement (3) befestigten Schiebenocken (9, 15), wobei mindestens eine Umlenkrolle (2) angetrieben ist, und wobei der Schiebenocken (9, 15) schwenkbar am Zugelement (3) befestigt und über eine Gelenkanordnung (13, 14) mit einer Linearführung (11) verbunden ist,
wobei die Gelenkanordnung (13, 14, 9) eine Parallelogrammführung ist, **dadurch gekennzeichnet,**
**dass** die Gelenkanordnung durch den Schiebenocken (9), ein auf der Linearführung (11) verdrehsicher geführtes Basisteil (13) sowie zwei den Schiebenocken (9) und das Basisteil (13) verbindende und mit diesen ein Parallelogramm bildende Blattfedern (14) gebildet ist.

2. Fördervorrichtung nach Anspruch 1,
**dadurch gekennzeichnet,**
**dass** das Zugelement (3) eine endlos umlaufende Kette oder ein Seil ist.

3. Fördervorrichtung nach Anspruch 1,
**dadurch gekennzeichnet,**
**dass** das Zugelement (3) ein Förderband oder Fördergurt ist.

4. Fördervorrichtung nach Anspruch 1,
**dadurch gekennzeichnet,**
**dass** das Zugelement (3) ein Riemen, insbesondere ein Zahnriemen ist.

5. Fördervorrichtung nach mindestens einem der Ansprüche 1 bis 4,
**dadurch gekennzeichnet,**
**dass** die Umlenkrollen (1, 2) das Zugelement (3), der Schiebenocken (9), die Gelenkanordnung (13, 14) und die Linearführung (11, 12) an einer gemeinsamen Halteplatte (4) oder einem gemeinsamen Gehäuse angebracht sind.

6. Fördervorrichtung nach mindestens einem der Ansprüche 1 bis 5,
**dadurch gekennzeichnet,**
**dass** sie als Vertikalförderer zum Anheben von Werkstücken (16) mittels der Schiebenocken (9, 15) ausgebildet ist.

7. Fördervorrichtung nach mindestens einem der Ansprüche 1 bis 6,
**dadurch gekennzeichnet,**
**dass** sie als Horizontalförderer ausgebildet ist.

8. Fördervorrichtung nach mindestens einem der Ansprüche 1 bis 7,
**dadurch gekennzeichnet,**
**dass** mindestens eine der Umlenkrollen (1, 2) mit einer Spannvorrichtung (7, 8) versehen ist.

9. Fördervorrichtung nach mindestens einem der Ansprüche 1 bis 8,
**dadurch gekennzeichnet,**
**dass** zwei Schiebenocken (9, 15) vorhanden sind, die um einen halben Umlauf des Zugelements (3) versetzt an diesem befestigt sind.

## Claims

1. A conveying device with a tension element (3) rotating endlessly around at least two guide pulleys (1, 2) and at least one sliding cam (9, 15) fastened to the tension element (3), wherein at least one guide pulley (2) is driven and wherein the sliding cam (9, 15) is pivotally fastened to the tension element (3) and is connected to a linear guide (11) via a joint arrangement (13, 14) wherein the joint arrangement (13, 14, 9) is a parallelogram guide, **characterised in that** the joint arrangement is constituted by the sliding cam (9), a base member (13) rotatable fixedly guided on the linear guide (11) and two leaf springs (14), which connect the sliding cam (9) and the base member (13) and together with them define a parallelogram.

2. A conveying device as claimed in claim 1, **characterised in that** the tension element (3) is an endless rotating chain or a cable.

3. A conveying device as claimed in claim 1, **characterised in that** the tension element (3) is a conveyer band or conveyer belt.

4. A conveying device as claimed in claim 1, **characterised in that** the tension element (3) is a belt, particularly a toothed belt.

5. A conveying device as claimed in at least one of claims 1 to 4, **characterised in that** the guide rollers (1, 2), the tension element (3), the sliding cam (9), the joint arrangement (13, 14) and the linear guide (11, 12) are attached to a common support plate (4) or a common housing.

6. A conveying device as claimed in at least one of claims 1 to 5, **characterised in that** it is constructed as a vertical conveyer for lifting workpieces (16) by means of the sliding cams (9, 15).

7. A conveying device as claimed in at least one of claims 1 to 6, **characterised in that** it is constructed as a horizontal conveyer.

8. A conveying device as claimed in at least one of claims 1 to 7, **characterised in that** at least one of the guide rollers (1, 2) is provided with a clamping device (7, 8).

9. A conveying device as claimed in at least one of claims 1 to 8, **characterised in that** two sliding cams (9, 15) are present, which are offset by half a revolution of the tension element (3) and are secured to it.

## Revendications

1. Dispositif de convoyage comprenant un élément de traction (3) en révolution sans fin autour d'au moins deux rouleaux de renvoi (1, 2), et au moins une came de poussée (9, 15) fixée audit élément de traction (3), sachant qu'au moins un rouleau de renvoi (2) est entraîné, et sachant que ladite came de poussée (9, 15) est fixée audit élément de traction (3) avec faculté de pivotement, et est reliée à un guide linéaire (11) par l'intermédiaire d'un ensemble articulé (13, 14),
ledit ensemble articulé (13, 14, 9) étant un système de guidage à parallélogramme, **caractérisé par le fait**
**que** l'ensemble articulé est formé par la came de poussée (9), par une partie de base (13) guidée avec verrouillage rotatif sur le guide linéaire (11), ainsi que par deux lames de ressort (14) qui relient ladite came de poussée (9) et ladite partie de base (13), et matérialisent un parallélogramme avec ces dernières.

2. Dispositif de convoyage selon la revendication 1,
**caractérisé par le fait**
**que** l'élément de traction (3) est une chaîne à révolution sans fin, ou un câble.

3. Dispositif de convoyage selon la revendication 1,
**caractérisé par le fait**
**que** l'élément de traction (3) est une bande de convoyage ou une sangle de convoyage.

4. Dispositif de convoyage selon la revendication 1,
**caractérisé par le fait**
**que** l'élément de traction (3) est une courroie, en particulier une courroie crantée.

5. Dispositif de convoyage selon au moins l'une des revendications 1 à 4,
**caractérisé par le fait**
**que** les rouleaux de renvoi (1, 2), l'élément de traction (3), la came de poussée (9), l'ensemble articulé (13, 14) et le guide linéaire (11, 12) sont installés sur une platine commune de retenue (4), ou sur un boîtier commun.

6. Dispositif de convoyage selon au moins l'une des revendications 1 à 5,
**caractérisé par le fait**
**qu'**il est réalisé sous la forme d'un convoyeur vertical dévolu au soulèvement de pièces usinées (16), au moyen des cames de poussée (9, 15).

7. Dispositif de convoyage selon au moins l'une des revendications 1 à 6,
**caractérisé par le fait**
**qu'**il est réalisé sous la forme d'un convoyeur horizontal.

8. Dispositif de convoyage selon au moins l'une des revendications 1 à 7,
**caractérisé par le fait**
**qu'**au moins l'un des rouleaux de renvoi (1, 2) est doté d'un dispositif de tension (7, 8).

9. Dispositif de convoyage selon au moins l'une des revendications 1 à 8,
**caractérisé par**
la présence de deux cames de poussée (9, 15), fixées à l'élément de traction (3) avec décalage représentant la moitié d'un tour complet de ce dernier.
